(19) Europäisches Patentamt
European Patent Office
Office européen des brevets

(11) **EP 0 847 254 B1**

(12) **EUROPÄISCHE PATENTSCHRIFT**

(45) Veröffentlichungstag und Bekanntmachung des Hinweises auf die Patenterteilung:
**23.06.1999 Patentblatt 1999/25**

(21) Anmeldenummer: 95930517.8

(22) Anmeldetag: 23.08.1995

(51) Int. Cl.⁶: **A61C 5/04**, A61C 19/00

(86) Internationale Anmeldenummer:
**PCT/EP95/03349**

(87) Internationale Veröffentlichungsnummer:
**WO 96/06521 (07.03.1996 Gazette 1996/11)**

(54) **ZAHNÄRZTLICHES INSTRUMENT**

DENTAL INSTRUMENT

INSTRUMENT A USAGE DENTAIRE

(84) Benannte Vertragsstaaten:
**AT CH DE LI**

(43) Veröffentlichungstag der Anmeldung:
**17.06.1998 Patentblatt 1998/25**

(73) Patentinhaber:
• **Stegemann, Wolfgang**
  **49186 Bad Iburg (DE)**
• **Oehler, Klaus**
  **49090 Osnabrück (DE)**

(72) Erfinder:
• **Stegemann, Wolfgang**
  **49186 Bad Iburg (DE)**
• **Oehler, Klaus**
  **49090 Osnabrück (DE)**

(74) Vertreter: **Pott, Ulrich**
  **Patentanwälte Busse & Busse,**
  **Postfach 12 26**
  **49002 Osnabrück (DE)**

(56) Entgegenhaltungen:
**DE-U- 9 413 725**

**Beschreibung**

Die Erfindung betrifft ein zahnärztliches Instrument nach dem Oberbegriff des Anspruchs 1.

Die Verwendung von fotopolymerisierbaren Kunststoffen ist in der Zahnheilkunde bekannt und wird zunehmend eingesetzt` beispielsweise auch aufgrund der Zunahme von Allergien gegenüber herkömmlichen metallischen Füllungen wie z.B. Amalgam. Hierbei wird hierkömmlicherweise die Kunststofffüllung zunächst im Zahn mit konventionellen Instrumenten gestopft und dann mittels einer Lichtquelle ausgehärtet.

Aus der DE 41 33 109 C1 ist ein zahnärztliches Handgerät mit einem lichtdurchlässigen Mundstück bekannt, auf das nach dem Modellieren eine Lichtquelle zum Aushärten der Kunststofffüllung aufgesetzt werden kann. Bei diesem Gerät sind jedoch für den Aushärtevorgang zwei Hände des behandelnden oder aber einer Assistenz oder Hilfsperson erforderlich, die in vielen Fällen jedoch nicht exakt visuell wahrnehmen kann, wo genau die Lichtquelle zu plazieren ist. Eine Behandlung mit zwei Händen durch die behandelnde Person ist nur schwerlich exakt durchzuführen. Zudem hat dieses Gerät einen großen Raumbedarf, so daß eine Behandlung im hinteren Mundraum und an sonstigen schwer zugänglichen Stellen nahezu unmöglich ist. Außerdem ist auch an leichter zugänglichen Stellen die Behandlung für den Patienten unangenehm. Darüber hinaus kann das Licht nicht konzentriert auf das auszuhärtende Füllungsmaterial gebracht werden; vielmehr kann das Licht über das Mundstück auch außerhalb der Mundstückspitze austreten, was zu Verlusten führt.

Des weiteren ist aus der US-A-4,673,353 ein zahnärztliches Instrument bekannt, das zum Einbringen von Füllungsmaterial in die Zahnkavität und zum gleichzeitigen Aushärten des Materials dient. Das Gerät besteht im wesentlichen aus einer Hülse und einem bewegbaren Kolben, der lichtleitend ausgebildet ist und mit einer Lichtquelle in Verbindung steht. Der Kolben ist innerhalb der Hülse beweglich geführt und kann das in die Hülse eingebrachte Füllungsmaterial wieder herauspressen. Obgleich durch die lichtleitende Ausbildung des Kolbens das Heranführen von Licht an eine aushärtbare Füllungsmasse möglich ist, ist dieses Instrument jedoch für die Zahnfüllarbeiten denkbar ungeeignet, da aufgrund des bei diesem Instrument angestrebten Blendschutzes durch die Hülse der Aushärtevorgang bereits eingeleitet wird, bevor das Zahnfüllmaterial in die Kavität eingebracht ist. Durch die Hülse ist zudem das Einbringen des Füllungsmaterials in Ecken und Unterschnitte einer Zahnkavität nahezu unmöglich. Aufgrund der Gestaltung der Hülse und der Lage ihrer stirnendseitigen Öffnung ist zudem das Pressen eines Füllungsmaterials äußerst problematisch, da wegen der angestrebten Schutzfunktion gegen Strahleneinwirkung auf die Augen das Licht auf den noch in der Hülse befindlichen Kunststoff treffen muß, wodurch der für eine zahnärztliche Füllung notwendigerweise weiche Kunststoff nicht mehr die gesamte, oft sehr komplizierte Kavitätengeometrie ausfüllen kann.

Aus der US-A-5,098,292 ist ein zahnärztliches Instrument gemäß dem Oberbegriff von Anspruch 1 bekannt, das aus einem lichtdurchlässigen Mundstück besteht, das an einem gleichfalls lichtdurchlässig ausgebildeten Griffstiel festlegbar ist. Das Instrument dient zum Einbringen und Modellieren einer Zahnfülllung mit anschließender Aushärtung. Das Füllen der Kavität mit den notwendigen Stopferarbeiten ist mit diesem Instrument allein schon aufgrund der Mundstückgestaltung nicht möglich, da z.B. nicht in allen Bereichen der Kavität der notwendige Stopferdruck erreicht werden und nicht überall hin zielgerichtet gestopft werden kann, so daß Hohlräume in der Füllung entstehen. Dies gilt auch für den kugelförmig gestalteten Endbereich des Modellierstücks dieses bekannten Instrumentes, da aufgrund der damit vorliegenden Hinterschneidungen bzw. Unterschnitte am Modellierstück selbst ein Ausbringen des Instrumentes aus einer ausgehärteten Materialportion ohne deren Beschädigung oder Verlust nicht möglich ist. Durch diese Unterschnitte zieht das Gerät auch bei der Bearbeitung von noch nicht gehärtetem Kunststoff wegen der Viskosität des Materials die eingebrachte Kunststoffportion wieder heraus.

Aus der EP-A-0 240 007 ist schließlich ein dentales Bestrahlungsgerät zur Aushärtung photopolymerisierbarer Zahnfüllungen insito bekannt, das einen im wesentlichen durchgehend konisch ausgebildeten Lichtleiter hat. Dieser Lichtleiter weist eine ballige Austrittsfläche auf, der ein gekrümmter Bereich mit konstantem Durchmesser und unmittelbar vor der Austrittsfläche ein Bereich mit stärkerem Konuswinkel vorgeordnet ist. Damit soll aufgrund der damit verbundenen vergrößerten Strahlungsindivergenz an der Austrittsfläche eine weitgehend halbkugelförmige Abstrahlung von etwa konstanter Strahlungsdichte ermöglicht sein. Nachteilig hierbei ist, daß dieses Bestrahlungsgerät erst zum Einsatz kommen kann, nachdem das eigentliche Stopferinstrument entfernt wurde. Durch die damit verbundene Druckentlastung der eingebrachten und noch nicht ausgehärteten Kunststofffüllung besteht das Risiko einer Hohlraum- und Rißbildung und darüber hinaus besteht die Gefahr, daß aufgrund der Viskosität des Kunststoffmaterials beim Entfernen Kunststoffmaterial ausgebracht wird. Des weiteren ist bei diesem dentalen Bestrahlungsgerät außerordentlich nachteilig, daß trotz des konisch geformten Lichtleiters das Licht nicht nur an der stirnendseitigen Austrittsfläche, sondern darüber hinaus auch über sonstige Mantelflächen entweichen kann. Eine konzentrierte Ausbringung des Lichtes ist damit nicht möglich. Die anzustrebende Schutzfunktionen gegen Strahleneinwirkungen auf die Augen des Patienten, des behandelnden Arztes und der Assistenzperson sind nicht zu gewährleisten.

Aufgabe der Erfindung ist es somit, ein zahnärztliches Instrument der eingangs genannten Art zur Verfügung zu stellen, mit dem in leicht handhabbarer Weise sowie präzise und problemlos bedienbar eine Zahnkavität mit lichthärtenden Stoffen gefüllt und anschließend dieses Füllmaterial lichtausgehärtet werden kann.

Zur Lösung dieser Aufgabe zeichnet sich das zahnärztliche Instrument durch die im Anspruch 1 angegebenen Merkmale aus. In den Ansprüchen 2 bis 22 sind vorteilhafte wesentliche Ausgestaltungen der Erfindung angegeben.

Durch die Ausbildung des Mundstücks als Stopferstück ist die Voraussetzung geschaffen, mit dem lichtdurchlässigen Mundstück eine Zahnkavität zu füllen, zu stopfen und unmittelbar nach Füll- und Stopferarbeiten auszuhärten, und zwar ohne das Instrument absetzen zu müssen. So ist beispielsweise nur ein Hand- oder Fußschalter zu betätigen, um die Lichtquelle zu aktivieren, um den Aushärtungsvorgang einzuleiten.

Durch die Ausstattung des Instruments mit zwei oder mehreren Lichtaustrittsfenstern ist eine individuelle Bestrahlung an verschiedenen Orten ermöglicht. So ist sowohl die zentrale Stopferzone als auch deren Randzonen individuell im Hinblick auf den gewünschten Polymerisationsvorgang zu bestrahlen.

Mit dem nach der Erfindung ausgebildeten stirnendseitigen Lichtaustrittsfenster kann der ausgeübte Druck am Ort und in der Richtung innerhalb der Füllungsportion aufrechterhalten werden für die unmittelbar darauffolgende Lichthärtung. Somit bleibt mit diesem Instrument die mittels Stopfdruck vorher geformte Füllungsportion in der hergestellten äußeren Gestalt, ohne daß von außen auf die Füllungsportion einwirkende Rückstellkräfte die hergestellte Ausformung wieder zurückstellen. Ein für Füllungen benutztes, gespanntes und gequengeltes Matrizenband übt von außen auf die Form der Füllungsportion einen großen Druck aus, dem die Viskosität des Füllungsmaterials nicht Widerstand gegen die Rückstellung aus der mittels Stopfdruck hergestellten Form entgegensetzen kann. Somit würde die Füllungsportion die Form wieder verlieren, die es mit dem am Ort und in der gewählten Richtung gehaltenen Druck erhalten hat. Durch die Möglichkeit der bleibenden Druckausübung ist auch die Schrumpfungstendenz lichthärtender Kunststoffe zur Lichtquelle hin kompensiert, so daß dadurch auftretendes Abreißen des Füllungsmaterials von der Kavitätenwand verhindert wird. Durch das stirnendseitige Lichtaustrittsfenster der Umhüllung kann das durch den Griffstiel und das Mundstück geleitete Licht gezielt eingeleitet werden, wobei durch die Umhüllung ein Austreten von Streulicht nahezu ausgeschlossen ist. Durch die konvexe Wölbung der Endfläche des in das Lichtaustrittsfenster eingesetzten Linseneinsatzes ist zunächst eine Fokussierung des Lichtes ermöglicht. Gleichfalls ermöglicht diese Gestaltung, auch in z.B. unterschnittenen Eckbereichen einer Kavität zu füllen, zu stopfen und zu härten und danach das Instrument ohne Zerstörungsrisiko der ausgehärteten Füllung herausnehmen zu können. Mit der Erfindung lassen sich Füllen, Stopfen und Halten des weichen Materials am gewählten Ort ohne zeitliche oder örtliche Unterbrechung mit der unmittelbar nachfolgenden Härtung übergangslos nacheinander durchführen.

Durch das zahnärztliche Instrument nach der Erfindung ist die sofortige Polymerisation unmittelbar nach dem Stopfervorgang mit sicherer unmittelbarer Einleitung des Lichtes in die Behandlungsstelle ermöglicht. Ein Wechsel des im Mund des Patienten vom Behandler und ggf. Helferin benutzten Instrumentariums ist nicht notwendig, was örtliche und zeitliche Sicherheit für den Polymerisationsvorgang bezüglich Start, Richtung und Tiefe der Reaktion mit sich bringt.

Ebenfalls ist ein Schattenwurf durch vorspringende Kavitätenkanten als Unsicherheitsfaktor für die Polymerisation nahezu ausgeschaltet, da der Behandler selbst das Licht in dem von ihm unmittelbar vorher gestopften Bereich wirksam werden läßt. Darüber hinaus muß der behandelnde Zahnarzt keine Änderung seiner Arbeitshaltung vornehmen. Eine Korrektur der Lichtrichtung entfällt damit ebenfalls.

Das Instrument nach der Erfindung ermöglicht zudem infolge des sofortigen Polymerisationsstartes nach Plazieren des Füllungsmaterials dieses genau an dem ihm zugewiesenen Platz zu halten. Da die Füllungskunststoffe entsprechend ihrer Viskosität vor Erreichen der Endhärte plastisch verformbar sind, ist das Risiko der Verformung durch von außen einwirkende, entgegengesetzte Kräfte nach der Erfindung ausgeschlossen.

Der direkte Kontakt mit dem Füllungsmaterial während der Lichteinleitung - was in der Regel unter Druck erfolgt - hat darüber hinaus den Vorteil, daß das Licht aus dem endseitigen Lichtaustrittsfenster ohne Distanz zum Füllungswerkstoff auf diesen einwirken kann. Darüber hinaus ist die Polymerisationsschrumpfung aufgrund des Aushärtevorganges unter Druck deutlich verringert, so daß auch das Risiko verringert ist, daß der Kontakt der Füllung mit den Kavitätenwänden beeinträchtigt wird bzw. abreißt. Der innige Kontakt mit dem Füllungsmaterial bringt darüber hinaus den weiteren Vorteil, daß die Durchdringung des Füllungsmaterials mit den zur Aktivierung der Polymerisation notwendigen Lichtstrahlen größer und die Gefahr des Bestehenbleibens von Restmonomeren verringert ist, wodurch das Risiko der Pulpenbeschädigung ebenfalls verringert und die Polymerisationstiefe von wenigstens 2 mm sicher eingehalten werden kann.

Das Instrument nach der Erfindung hat zwei Lichtaustrittsfenster, wobei ein erstes Lichtaustrittsfenster griffstielseitig vor dem stirnendseitigen Lichtaustrittsfenster angeordnet ist.

Durch das erste Lichtaustrittsfenster kann eine größere Fläche bestrahlt werden, so daß neben einer punktuellen gleichzeitig eine großflächige Polymerisation ermöglicht ist. Dies ist insbesondere sinnvoll bei großflächigen Stopfbereichen, da hier die Polymerisation der gesamten Stopffläche nur mit dem relativ kleinen stirnendsetigen Lichtaustrittsfenster nicht in einem Arbeitsgang gelingt und damit unzureichend polymerisierte Randbereiche zurückbleiben. Durch das erste Lichtaustrittsfenster ist eine sichere Erfassung auch dieser Problemzonen erreicht.

Durch einen bevorzugten Abstand von 15 bis 20 mm zwischen den beiden Lichtaustrittsfenstern und einer numerischen Apertur von sin 10° bis sin 20° des ersten Lichtaustrittsfensters ist gewährleistet, daß der aus dem ersten Lichtaustrittsfenster austretende Lichtstrahl sich nur geringfügig aufweitet, so daß das Füllungsmaterial aus beiden Lichtaustrittsfenstern mit nahezu der gleichen Bestrahlungsstärke bestrahlt wird und somit eine gleichmäßige Aushärtung des Füllungsmaterials erreicht ist.

Da bei dem Instrument nach der Erfindung das Licht ausschließlich auf die auszuhärtende Füllung gelangt und nicht anderweitig abstrahlt, weil das Mundstück von einer Umhüllung umgeben ist, ist auch vollständig die Gefahr ausgeschlossen, daß das Licht außerhalb der Mundhöhle abstrahlt mit z.B. der Gefahr von Schädigungen der Netzhaut vom Behandler, Patienten und Assistenten.

Bevorzugterweise kann die Umhüllung des Stopferteils aus Edelstahl bestehen, da hierdurch eine sichere Desinfektion bzw. Sterilisation ermöglicht ist.

Im Verlaufe der Lichtleitstrecke kann in dem Fall, in dem der Lichtstrahl vom Durchmesser bzw. der Breite her zu verkleinern ist, ein Lichtleitkegelstück oder dgl. aus z.B. miteinander verschmolzenen Kernmantelstäben Einsatz finden.

Stopferstück und Griffstiel können einstückig als Handgriffteil ausgebildet sein, so daß keine zusätzlichen optischen Kupplungsstücke erforderlich sind. Eine andere Ausführungsvariante sieht vor, den Griffstiel und das Stopferteil zwei- oder mehrteilig auszubilden, wobei das Modellierstück lichtleitend mit dem Griffstiel verbindbar ist. Damit ist die Möglichkeit geschaffen, z.B. vom Krümmungsradius und/oder Durchmesser sich unterscheidende Stopferstücke an dem Griffstiel anzubringen, um unterschiedlichen Modellier- bzw. Füllungsanforderungen gerecht zu werden. Außerdem sind die einzelnen Stopferstücke einfacher zu desinfizieren bzw. zu sterilisieren.

Das Handstück kann auch aus Glas bzw. Plexiglas und zum Schutz gegenüber Beschädigungen mit einer Kunststoffumhüllung versehen sein. Glasmaterialien sowie Plexiglas besitzen die erforderlich lichtleitenden Eigenschaften und sind in den erforderlichen Gestaltungen herstellbar. Durch die Wahl spezieller Glas- oder anderer optischer Kunststofffasern kann erreicht werden, daß das Licht mit nur geringen Dämpfungsverlusten durch das Handstück zur Stopferstückspitze hin geführt wird. Im allgemeinen sind die Dämpfungsverluste bei einem Vollmaterial wie Plexiglas höher als bei einem passend zur angekoppelten Wellenlänge bzw. zu dem eingekoppelten Wellenlängenbereich ausgewählten Fasertyp.

Bevorzugterweise sind die Lichtleiter über flexible optische Fasern mit einer Kaltlichtquelle verbunden. Die Auswahl der flexiblen optischen Fasern erfolgt nach den Kriterien der Wellenlänge des einzuleitenden Lichtes, dem gewünschten Biegeradius sowie den tolerierbaren Dämpfungsverlusten bei einer vorgegebenen Länge des Lichtleiters, die vorteilhafterweise so ausgelegt ist, daß das Handstück optimal gehandhabt werden kann. Die flexiblen optischen Fasern werden über Kupplungselemente an die Lichtleiter des Handstücks angekoppelt, wobei diese zweckmäßigerweise so gestaltet sind, daß die Ankopplungsverluste der Lichtleistung minimal sind.

Zweckmäßigerweise weist das Instrument einen Regler mit ggf. einstellbarem Zeitschalter auf, so daß der Behandler die Strahlleistung variieren kann, wodurch die jeweils erforderliche Polymerisationsstufe oder die gewünschte Härte des Kunststoffes optimal eingestellt werden kann.

Als Lichtquelle ist bevorzugtermaßen eine Halogenlampe vorgesehen, die Wellenlängen im ultravioletten und sichtbaren Bereich emittiert. Derartige Halogenlampen sind relativ preiswert und in ihren räumlichen Ausmaßen nicht sehr groß. ZweckmäßigerweiSe ist die Halogenlampe mit einem Fußschalter betätigbar, so daß der Zahnarzt die Hände frei zum Stopfen der Zahnfüllung hat. Zur Vermeidung von Gewebeschädigungen durch das Licht mit Wellenlängen von < 320 nm, kann zwischen der Halogenlampe und den flexiblen optischen Fasern ein Filter angeordnet werden, der Wellenlängen < 320 nm absorbiert oder reflektiert.

Ein Ausführungsbeispiel des Gegenstands der Erfindung ist nachstehend anhand der Zeichnung erläutert.

In der Zeichnung zeigen:

Fig. 1　eine schematische Darstellung eines Ausführungsbeispiels der Bauteile eines zahnärztlichen Instrumentes nach der Erfindung;

Fig. 2　eine schematische und detailliertere Darstellung des Stopferstücks aus Fig. 1;

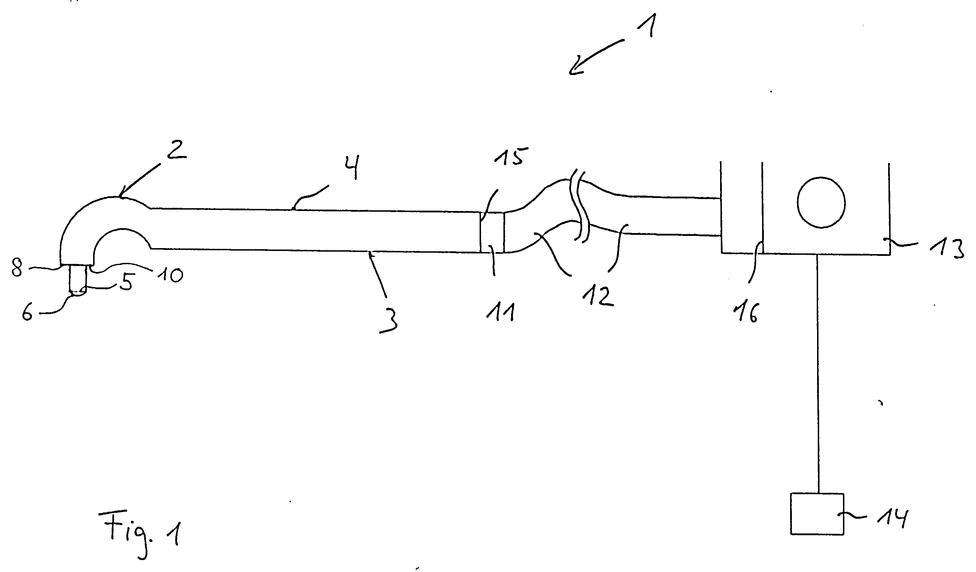

Das in Fig. 1 allgemein mit 1 bezeichnete zahnärztliche Instrument besteht aus einem Stopferstück 2 und einem Griffstiel 3, die zusammen ein Handstück 4 ausbilden. Eine andere Ausführungsvariante - hier nicht gezeigt - sieht vor, daß das Stopferstück 2 und der Griffstiel 3 separat ausgebildet sind und über Verbindungselemente oder dergleichen miteinander lichtleitend verbindbar sind. Das Stopferstück 2 weist eine Krümmung auf, während der Griffstiel 3 in erster Linie geradlinig ausgebildet ist. Das Handstück 4 ist insgesamt lichtleitend ausgebildet und von einer Umhüllung umgeben. Die Umhüllung soll in dem veranschaulichten Ausführungsbeispiel ein Edelstahlrohr sein, in dem lichtleitende Fasern angeordnet sind, die in einen Linseneinsatz 6 münden, der aus dem stirnendseitigen Lichtaustrittsfenster 5 herausragt und endseitig konvex gewölbt ist. Dieser Linseneinsatz 6 bildet die Spitze des Stopferstücks 2.

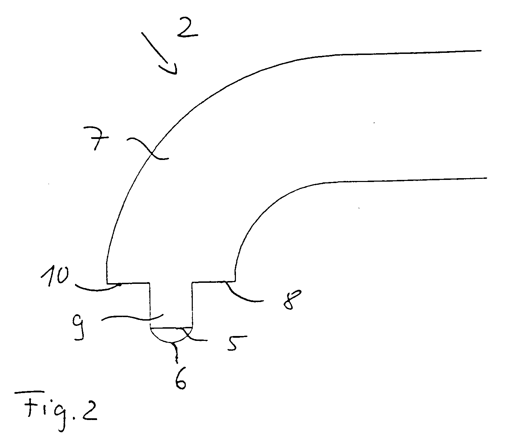

Wie Fig. 2 zeigt, weist das Stopferstück 2 einen vom Durchmesser her größeren Bereich 7 auf, der eine Krümmung von etwa 90° durchläuft. An den Bereich 7 schließt sich orthogonal mit einem Kragen 8 ein zylinderförmiger Stopfzapfen 9 an, der an seinem Ende das stirnendseitige Lichtaustrittsfenster 5 mit dem konvex gewölbten Linsenaufsatz 6 aufweist. Der ringförmige Kragen 8 ist als erstes Lichtaustrittsfenster 10 ausgebildet. Der Abstand zwischen den beiden Lichtaustrittsfenstern 5, 10 beträgt 15 bis 20 mm. In dem Stopferstück 2 sind hier nicht näher dargestellte Lichtleitfasern angeordnet, wobei ein inneres Bündel von Fasern bis zum stirnendseitigen Lichtaustrittsfenster 5 verläuft, während ein äußeres Lichtleitfaserbündel, das das innere Faserbündel umschließt, am ersten Lichtaustrittsfenster 10 endet.

An das dem Stopferstück 2 abgewandte Ende des Griffstiels 3 schließt sich ein Kupplungselement 11 an, durch das flexible optische Fasern 12 mit dem Handstück 4 verbunden werden. Diese flexiblen lichtleitenden Fasern 12 stellen die Verbindung zwischen dem Handstück 4 und einer Halogenlampe 13 her, die das zur Aushärtung der Kunststofffüllung erforderliche Licht aussendet. Die Länge der flexiblen optischen Fasern 12 liegt bevorzugterweise im Bereich von 1,5 m, so daß die Halogenlampe 13 an einem sicheren Platz außerhalb der Reichweite des Bewegungsfeldes des Behandlers aufgestellt werden kann. Die Halogenlampe 13 ist mit einem Fuß- oder Handschalter 14 zu betätigen. Zur Einstellung der Lichtleistung ist zweckmäßigerweise am Kupplungselement 11 ein Abschwächer 15 angebracht. Außerdem ist zweckmäßigerweise zwischen den flexiblen lichtleitenden Fasern 12 und der Halogenlampe 13 ein UV-Filter 16 angeordnet, der Licht mit Wellenlängen < 320 mm absorbiert oder reflektiert.

**Patentansprüche**

1.  Zahnärztliches Instrument mit einem Anschlußelement zur Verbindung mit einer Lichtquelle aufweisenden lichtleitenden Griffstiel (3) sowie einem an diesem festlegbaren lichtdurchlässigen Mundstück (2) zum Aushärten von lichthärtbaren Zahnfüllungsmassen, dadurch gekennzeichnet, daß das Mundstück als ein eine Umhüllung mit zumindest zwei Lichtaustrittsfenstern (5, 10) umfassendes Stopferstück (2) ausgebildet ist, und wobei eines der Lichtaustrittsfenster als stirnendseitiges Lichtaustrittsfenster (5) ausgebildet ist und einen endseitig konvex gewölbten Linseneinsatz (6) zur Fokussierung des Lichtes und zum Stopfen der Zahnfüllung aufweist.

2.  Zahnärztliches Instrument nach Anspruch 1, **dadurch gekennzeichnet**, daß das Stopferstück (2) und der Griffstiel (3) einteilig ausgebildet sind.

3.  Zahnärztliches Instrument nach Anspruch 1, **dadurch gekennzeichnet**, daß das Stopferstück (2) und der Griffstiel (3) zwei- oder mehrteilig ausgebildet sind und das Stopferstück (2) mit dem Griffstiel (3) lichtleitend verbindbar ist.

4.  Zahnärztliches Instrument nach einem der Ansprüche 1 bis 3, **dadurch gekennzeichnet**, daß ein erstes Lichtaustrittsfenster (10) griffstielseitig vor dem stirnendseitigen Lichtaustrittsfenster (5) angeordnet ist.

5.  Zahnärztliches Instrument nach einem der Ansprüche 1 bis 4, **dadurch gekennzeichnet**, daß das Stopferstück (2) einen zentralen Stopferzapfen (9) mit einem diesen umgrenzenden Kragen (8) aufweist.

6.  Zahnärztliches Instrument nach Anspruch 5, **dadurch gekennzeichnet**, daß an dem Stopferzapfen (9) das stirnendseitige Lichtaustrittsfenster (5) angeordnet ist.

7.  Zahnärztliches Instrument nach Anspruch 5, **dadurch gekennzeichnet**, daß der Stopferzapfen (9) in orthogonaler Ausrichtung zu einem Bereich (7) angeformt und zylinderförmig ausgebildet ist.

8.  Zahnärztliches Instrument nach einem der Ansprüche 5 bis 7, **dadurch gekennzeichnet**, daß das erste Lichtaustrittsfenster (10) einen Teil des Kragens (8) ausbildet.

9.  Zahnärztliches Instrument nach einem der Ansprüche 4 bis 8, **dadurch gekennzeichnet**, daß der Abstand zwischen den beiden Lichtaustrittsfenstern (5,10) im Bereich von 15 bis 20 mm liegt, wobei die numerische Apertur des ersten Lichtaustrittsfensters (10) im Bereich von sin 10° bis sin 20° liegt.

10. Zahnärztliches Instrument nach einem der Ansprüche 1 bis 9, **dadurch gekennzeichnet**, daß der Linseneinsatz (6) eine polierte Oberfläche hat.

11. Zahnärztliches Instrument nach einem der Ansprüche 1 bis 10, **dadurch gekennzeichnet**, daß das Stopferstück (2) und/oder der Griffstiel (3) aus ummanteltem Glas- bzw. Plexiglasmaterial bestehen.

12. Zahnärztliches Instrument nach einem der Ansprüche 1 bis 10, **dadurch gekennzeichnet**, daß das Stopferstück (2) und/oder der Griffstiel (3) von der Umhüllung umgrenzte lichtleitende Fasern aufweisen.

**13.** Zahnärztliches Instrument nach Anspruch 12, **dadurch gekennzeichnet,** daß die Umhüllung aus einem Kunststoff- oder Edelstahlmaterial besteht.

**14.** Zahnärztliches Instrument nach einem der Ansprüche 4 bis 13, **dadurch gekennzeichnet,** daß die lichtleitenden Fasern für das stirnendseitige Lichtaustrittsfenster (5) von den lichtleitenden Fasern für das erste Lichtaustrittsfenster (10) umgeben sind.

**15.** Zahnärztliches Instrument nach einem der Ansprüche 3 bis 14, **dadurch gekennzeichnet,** daß an dem Griffstiel (3) unterschiedlich ausgebildete Stopferstücke (2) festlegbar sind.

**16.** Zahnärztliches Instrument nach einem der Ansprüche 1 bis 15, **dadurch gekennzeichnet,** daß am Griffstiel (3) Kupplungselemente (11) angeordnet sind, über die die Lichtleiter über flexible optische Fasern (12) mit der Lichtquelle (13) verbindbar sind.

**17.** Zahnärztliches Instrument nach Anspruch 16, **dadurch gekennzeichnet,** daß ein Regler (15) zur Einstellung der Lichtstrahlleistung vorgesehen ist.

**18.** Zahnärztliches Instrument nach einem der Ansprüche 1 bis 17, **dadurch gekennzeichnet,** daß als Lichtquelle (13) eine Halogenlampe mit Wellenlängen im ultravioletten und sichtbaren Bereich vorgesehen ist.

**19.** Zahnärztliches Instrument nach Anspruch 18, **dadurch gekennzeichnet,** daß die Halogenlampe (13) mit einem Fuß- oder Handschalter (14) betätigbar ist.

**20.** Zahnärztliches Instrument nach einem der Ansprüche 1 bis 19, **dadurch gekennzeichnet,** daß zwischen der Halogenlampe (13) und der Lichtleitübertragungsstrecke ein UV-Filter (16) angeordnet ist, der Wellenlängen < 320 nm absorbiert oder reflektiert.

**21.** Zahnärztliches Instrument nach einem der Ansprüche 1 bis 20, **dadurch gekennzeichnet,** daß auf der Lichtleitübertragungsstrecke im Griffstiel (3) und/oder im Stopferstück (2) ein oder mehrere Lichtleitelemente zur Verjüngung des Lichtstrahls vorgesehen sind.

**22.** Zahnärztliches Instrument nach Anspruch 21, **dadurch gekennzeichnet,** daß das Lichtleitelement als Lichtleitkegelstück ausgebildet ist.

**Claims**

**1.** A dental instrument with a connecting element for connection to a light-conducting handle (3) comprising a light source and, adapted to be mounted on the handle, a light-permeable mouthpiece (2) for curing light-hardenable dental filling compositions, characterised in that the mouthpiece is constructed as a condensing member (2) comprising a sheath having at least two light outlet windows (5, 10), one of the light outlet windows being constructed as an end-face light outlet window (5), and having a convexly curved lens insert (6) at the end for focusing the light and for condensing the tooth filling.

**2.** A dental instrument according to claim 1, characterised in that the condensing member (2) and the handle (3) are constructed in one piece.

**3.** A dental instrument according to claim 1, characterised in that the condensing member (2) and the handle (3) are constructed in two or more parts, the condensing member (2) being adapted for connection to the handle (3) in light-conducting fashion.

**4.** A dental instrument according to one of claims 1 to 3, characterised in that a first light outlet window (10) is, at the handle end, disposed in front of the end-face light outlet window (5).

**5.** A dental instrument according to one of claims 1 to 4, characterised in that the condensing member (2) comprises a central condensing peg (9) with a collar (8) defining it.

6.  A dental instrument according to claim 5, characterised in that the end-face light outlet window (5) is disposed on the condensing peg (9).

7.  A dental instrument according to claim 5, characterised in that the condensing peg (9) is cylindrical and is formed into a portion (7) in an orthogonal direction.

8.  A dental instrument according to one of claims 5 to 7, characterised in that the first light outlet window (10) forms a part of the collar (8).

9.  A dental instrument according to one of claims 4 to 8, characterised in that the gap between the two light outlet windows (5, 10) is in the region of 15 to 20 mm, the numerical aperture of the first light outlet window (10) being in the range from sin 10° to sin 20°.

10. A dental instrument according to one of claims 1 to 9, characterised in that the lens insert (6) has a polished surface.

11. A dental instrument according to one of claims 1 to 10, characterised in that the condensing member (2) and/or the handle (3) consist of sheathed glass or plexiglass material.

12. A dental instrument according to one of claims 1 to 10, characterised in that the condensing member (2) and/or the handle (3) comprise light conducting fibres bounded by the casing.

13. A dental instrument according to claim 12, characterised in that the casing consists of a synthetic plastics or stainless steel material.

14. A dental instrument according to one of claims 4 to 13, characterised in that the light conducting fibres for the end-face light outlet window (5) are surrounded by the light conducting fibres for the first light outlet window (10).

15. A dental instrument according to one of claims 3 to 14, characterised in that variously constructed condensing members (2) can be fitted on the handle (3).

16. A dental instrument according to one of claims 1 to 15, characterised in that disposed on the handle (3) are coupling elements (11) via which the light conductors can be connected to the light source (13) via flexible optical fibres (12).

17. A dental instrument according to claim 16, characterised in that a regulator (15) is provided for adjusting the light bean, output.

18. A dental instrument according to one of claims 1 to 17, characterised in that a halogen lamp with wavelengths in the ultra-violet and visible range is provided as the light source (13).

19. A dental instrument according to claim 18, characterised in that the halogen lamp (13) can be actuated by a foot switch or hand switch (14).

20. A dental instrument according to one of claims 1 to 19, characterised in that between the halogen lamp (13) and the light conducting transfer path there is an ultra-violet filter (16) which absorbs or reflects wavelengths < 320 nm.

21. A dental instrument according to one of claims 1 to 20, characterised in that for tapering the light beam one or a plurality of light conducting elements are provided on the light conducting transfer path in the handle (3) and/or in the condensing member (2).

22. A dental instrument according to claim 21, characterised in that the light conducting element is constructed as a conical light conducting member.

**Revendications**

1.  Instrument dentaire comprenant un élément de connexion destiné à le relier à un manche (3) conduisant la lumière et présentant une source lumineuse, ainsi qu'un embout (2) transparent pouvant être fixé à ce manche et destiné

7

au durcissement de masses de matériau d'obturation dentaire durcissables à la lumière, caractérisé en ce que l'embout est conçu comme une partie formant fouloir (2) composée d'une gaine pourvue d'au moins deux fenêtres de sortie de lumière (5, 10), l'une des fenêtres de sortie de lumière étant conçue comme une fenêtre de sortie de lumière du côté d'about (5) et présentant une lentille rapportée (6) à courbure d'extrémité convexe destinée à focaliser la lumière et à tasser le matériau d'obturation dentaire.

2. Instrument dentaire suivant la revendication 1, caractérisé en ce que la partie formant fouloir (2) et le manche (3) sont venus d'une seule pièce.

3. Instrument dentaire suivant la revendication 1, caractérisé en ce que la partie formant fouloir (2) et le manche (3) sont conçus en deux ou plus de deux parties et en ce que la partie formant fouloir (2) peut être reliée au manche (3) de manière à conduire la lumière.

4. Instrument dentaire suivant l'une quelconque des revendications 1 à 3, caractérisé en ce qu'une première fenêtre de sortie de lumière (10) est disposée du côté du manche devant la fenêtre de sortie de lumière (5) du côté d'about.

5. Instrument dentaire suivant l'une quelconque des revendications 1 à 4, caractérisé en ce que la partie formant fouloir (2) comporte un téton de fouloir central (9) délimité par une collerette (8).

6. Instrument dentaire suivant la revendication 5, caractérisé en ce que la fenêtre de sortie de lumière (5) du côté d'about est disposée sur le téton de fouloir (9).

7. Instrument dentaire suivant la revendication 5, caractérisé en ce que le téton de fouloir (9) est intégré dans une zone (7) suivant un alignement orthogonal et a la forme d'un cylindre.

8. Instrument dentaire suivant l'une quelconque des revendications 5 à 7, caractérisé en ce que la première fenêtre de sortie de lumière (10) forme une partie de la collerette (8) .

9. Instrument dentaire suivant l'une quelconque des revendications 4 à 8, caractérisé en ce que la distance séparant les deux fenêtres de sortie de lumière (5, 10) est comprise entre 15 et 20 mm, l'ouverture numérique de la première fenêtre de sortie de lumière (10) étant située entre le sinus d'un angle de 10° et le sinus d'un angle de 20° .

10. Instrument dentaire suivant l'une quelconque des revendications 1 à 9, caractérisé en ce que la lentille rapportée (6) a une surface polie.

11. Instrument dentaire suivant l'une quelconque des revendications 1 à 10, caractérisé en ce que la partie formant fouloir (2) et/ou le manche (3) sont faits en verre ou plexiglas enrobé.

12. Instrument dentaire suivant l'une quelconque des revendications 1 à 10, caractérisé en ce que la partie formant fouloir (2) et/ou le manche (3) présentent des fibres conduisant la lumière enveloppées par la gaine.

13. Instrument dentaire suivant la revendication 12, caractérisé en ce que la gaine est faite en une matière plastique ou en un acier spécial.

14. Instrument dentaire suivant l'une quelconque des revendications 4 à 13, caractérisé en ce que les fibres conduisant la lumière pour la fenêtre de sortie de lumière du côté d'about (5) sont entourées par les fibres conduisant la lumière pour la première fenêtre de sortie de lumière (10).

15. Instrument dentaire suivant l'une quelconque des revendications 3 à 14, caractérisé en ce que des parties formant fouloir (2) de différentes formes peuvent être fixées au manche (3).

16. Instrument dentaire suivant l'une quelconque des revendications 1 à 15, caractérisé en ce que sur le manche (3) sont appliqués des éléments de connexion (11) par lesquels les guides de lumière peuvent être reliés à la source lumineuse (13) par l'intermédiaire de fibres optiques flexibles (12) .

17. Instrument dentaire suivant la revendication 16, caractérisé en ce qu'un gradateur (15) est prévu pour régler l'intensité du rayonnement lumineux.

18. Instrument dentaire suivant l'une quelconque des revendications 1 à 17, caractérisé en ce qu'une lampe halogène, dont les longueurs d'onde sont comprises dans l'ultraviolet et le visible, est prévue comme source lumineuse (13) .

19. Instrument dentaire suivant la revendication 18, caractérisé en ce que la lampe halogène (13) peut être commandée par un commutateur au pied ou à main (14).

20. Instrument dentaire suivant l'une quelconque des revendications 1 à 19, caractérisé en ce qu'entre la lampe halogène (13) et le trajet de transmission de la lumière est disposé un filtre ultraviolet (16) qui absorbe ou réfléchit des longueurs d'onde inférieures à 320 nm.

21. Instrument dentaire suivant l'une quelconque des revendications 1 à 20, caractérisé en ce qu'un ou plusieurs éléments servant de guides de lumière et destinés à rétrécir le rayon lumineux sont prévus sur le trajet de transmission de la lumière dans le manche (3) et/ou dans la partie formant fouloir (2) .

22. Instrument dentaire suivant la revendication 21, caractérisé en ce que l'élément servant de guide de lumière se présente sous la forme d'un cône.

Fig. 1

Fig. 2